# EUROPEAN PATENT SPECIFICATION

(11) **EP 1 209 048 B1**
(45) Date of publication and mention of the grant of the patent: **07.12.2005**
(21) Application number: 00830768.8
(22) Date of filing: 22.11.2000
(51) Int. Cl.: B60R 25/08, B60R 25/06

(54) **Anti-theft for motor vehicles**
Diebstahlsicherung für Kraftfahrzeuge
Dispositif antivol pour véhicules

(43) Date of publication of application: 29.05.2002
(73) Proprietor: Control Car System S.r.l, 00135 Roma RM (IT)
(72) Inventor: Prezioso, Ruggero, 00189 Roma (IT)
(74) Representative: Leone, Mario

(56) References cited:
- EP-A- 0 572 258
- WO-A-94/16924
- DE-A- 4 435 153
- GB-A- 2 195 005
- US-A- 4 669 570
- US-A- 5 163 741
- US-A- 5 630 487

## Description

The present invention refers to an anti-theft device for motor vehicles of electronic-mechanical type difficult to tamper and/or cut out.

Anti-theft systems for motor vehicles of type and with features different the ones from the others are currently known and widely utilized. In particular a first category of anti-theft devices, of electronic type, is nowadays very widespread. Such anti-theft devices act on the electric system of the motor vehicle, by preventing the vehicle engine from starting and/or normally operating. Such anti-theft devices are usually activated and deactivated by a remote control transmitting an encoded radio signal. The main drawback of these anti-theft devices is that the signal is easily interceptable by a thief by simple receiving devices (scanner) . In this way the thief can then reproduce the signal and easily disable the anti-theft device. The same principle is adopted also by those anti-theft devices which are enabled and disabled automatically by a radio transmitter (transponder) usually placed in the motor vehicle starter key.

Furthermore, there is another category of anti-theft devices comprising all those mechanical devices aiming at preventing the use of the motor vehicle, for example systems for blocking pedals, steering wheel and/or gear lever. Such systems however can be easily sidestepped since they can be disabled by common keys which can be easily duplicated. Furthermore, they usually have not such mechanical resistance to resist the action of a thief decided to the theft.

At last, from the Italian patent n° 1277867 granted on 12 November 1997 in the name of the same applicant, a type of mechanical anti-theft system is known, acting on the hydraulic system of brakes or clutch of the motor vehicle so that, when it is enabled, the brakes are activated or the clutch is inoperable, then by blocking the motor vehicle.

Nevertheless this type of anti-theft device has some disadvantages. The first disadvantage is that it is a fully mechanical system, usually activated by the user by an electroactuator. This firstly involves the need of having to remind to activate the anti-theft device when the motor vehicle is left unattended.

A second disadvantage is that such anti-theft device is not wholly reliable since the enabling mechanism could be accidentally activated during the usual running of the motor vehicle with serious consequences.

From US-A-4669570, an anti-theft device acting on the hydraulic braking circuit of a vehicle is known.

Although such a device is electronic controlled, it has some disadvantage.

In particular, the disadvantage consists in the fact that if the motor vehicle remains for a long period of time with the anti-theft device in a enabled status, the braking elements would tend to adhere to the disks, especially due to thermal excursions, by causing serious problems when the anti-theft device is disabled to allow the motor vehicle to start again.

It is an object of the present invention to solve the above mentioned problems of known art by providing an anti-theft device for motor vehicles comprising:
- a control unit with a programmable-type microprocessor;
- a motorized valve, apt to be mounted in a motor vehicle hydraulic circuit and to operate in a unidirectional way when positioned in a locked position, said valve being apt to be controlled by said control unit;
- an electronic device, apt to generate an encoded electric signal when connected to said anti-theft device; and
- means for reading and decoding said encoded electric signal generated by said electronic device,
characterised in that it further comprises means for the automatic performance of a resetting procedure of the inner pressure of said hydraulic circuit, wherein said means for the automatic performance of a resetting procedure is cyclically activated by said control unit when the anti-theft device is enabled.

The main advantage of the anti-theft device according to the present invention is that it can be enabled and/or disabled exclusively by using a "contact"-type electronic key with variable code. This kind of key is absolutely not reproducible, since the emitted signal is not remotely transmitted and therefore is not interceptable.

A second advantage of the anti-theft device according to the present invention is that it acts contemporarily on the electrical system of the motor vehicle and on the hydraulic circuit thereof, as well as both on the one related to the brakes, and on the one related to the clutch. This feature is particularly advantageous when the anti-theft device is installed on trucks, considering that these trucks cannot in any way be moved if the clutch does not work correctly.

The action on the hydraulic circuit is obtained by means of a motorized valve electronically controlled in a "clever" way. For example the anti-theft device according to the present invention is equipped with a system that, by cyclically activating and deactivating the motorized valve, prevents the adhering phenomenon of the braking elements as above described and furthermore it avoids that the hydraulic circuit remains under pressure for long periods, condition under which the gaskets and fillets of the system itself tend to deteriorate more easily.

Another advantage is that it comprises a control electronic system providing a plurality of possibilities and functions aiming at guaranteeing the maximum functionality during the anti-theft device use.

A further advantage is that the anti-theft device according to the present invention is equipped with a safety system which enables the activation thereof exclusively when the engine is switched off, by then eliminating every risk coming from possible undesired activations during running.

Additional advantages, features and application modes of the present invention will be evident from the following detailed description of a preferred embodiment, shown by way of example and not for limitative purposes, by referring to the figures of the enclosed drawings, wherein:
figure 1 is a block diagram of the anti-theft device according to the present invention;
figures 2A to 4E are electric diagrams related to the control system of the anti-theft device according to the present invention; and
figure 5 is an electric diagram of an electronic device for activating and/or deactivating the anti-theft device.

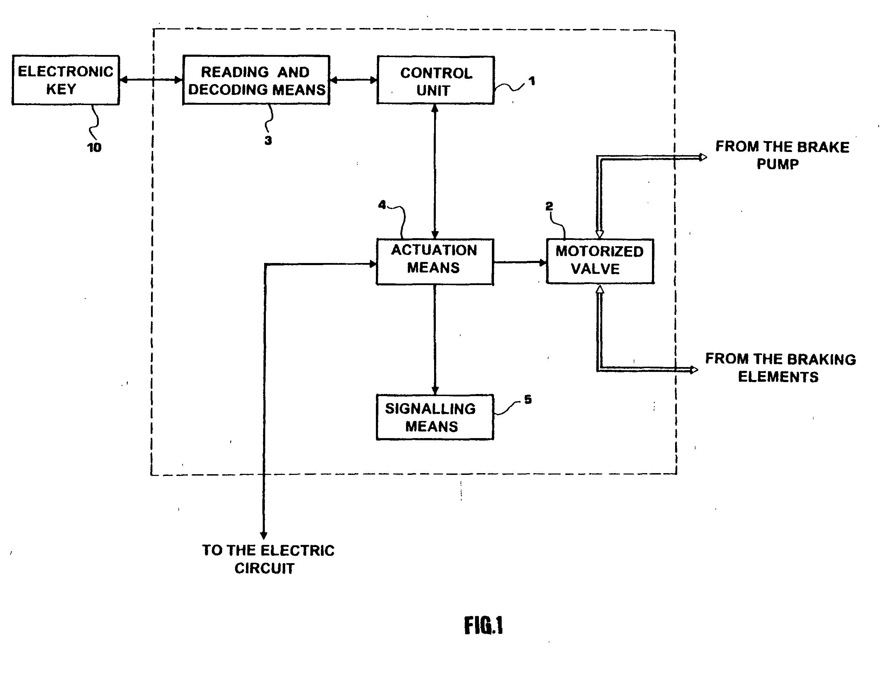

By referring to the figure 1, it shows a block diagram of the anti-theft device according to the present invention.

According to the invention, a control unit 1 is provided supervising the operation of the whole anti-theft device and controlling all the components connected thereto, in particular a motorized valve 2. The implementation and the hydraulic/mechanical operation of the motorized valve 2 are already known from the previously mentioned patent and therefore they will not be described in detail.

The motorized valve 2 is placed in the hydraulic circuit of the braking system of the vehicle whereon the anti-theft device is installed. Said valve is so as to be able to take two positions. In a first position, the valve 2 enables the liquid to pass in both directions, by making possible the usual operation of the hydraulic circuit of the motor vehicle. In a second locked position, the valve 2 operates in a unidirectional way by enabling the liquid to pass in one direction only, and more precisely from the brake pump towards the braking elements.

This second locked position, taken when the anti-theft device is enabled, guarantees that once the brake pedal is pushed, the braking elements remain locked in a braking condition even after the pedal is released, by then preventing any additional movement of the motor vehicle.

Naturally the same valve can be also inserted in the hydraulic circuit related to the clutch operating system. In this way, the pressure of the clutch pedal when the anti-theft device is enabled would make the clutch itself unusable by making then difficult if not impossible the motor vehicle running, above all if the vehicle is a truck such as trailer truck or the likes.

The motorized valve 2 is controlled by the control unit 1 according to a precise logic implemented by a control program stored into an inner memory unit thereof not shown in the figure. The control program implements all the functions of the anti-theft system which will be illustrated in the course of this description.

Reading and decoding means 3 is provided to detect and decode an encoded electric signal generated by an electronic device 10, for example an electronic key which, when is connected to the anti-theft device, generates a pulse train representing a digital code stored inside the control unit 1. This code is assigned to the electronic key and to the control unit and it is practically unique since it is generated by chance on the basis of a coding algorithm with more than 1.8*10¹⁹ combinations of a type already known in the state of art.

The electronic key 10 is connected to the electronic control system, in order to enable the anti-theft device, by means of a contact system, for example a connector JP1 having three contacts, two of them serve to electrically power supply the electronic key and the third one is utilized to transmit the encoded electric signal to the electronic system. In this way the control unit 1, after having recognized and decoded the signal transmitted by the key, sends predetermined commands to actuation means 4 which acts both on the electric circuit of the vehicle by preventing the starting thereof, and on the motorized valve 2 by putting it in the already described locked position.

The anti-theft device can be then disabled exclusively by inserting the electronic key in the control unit by the connector connecting the same to the electronic control system.

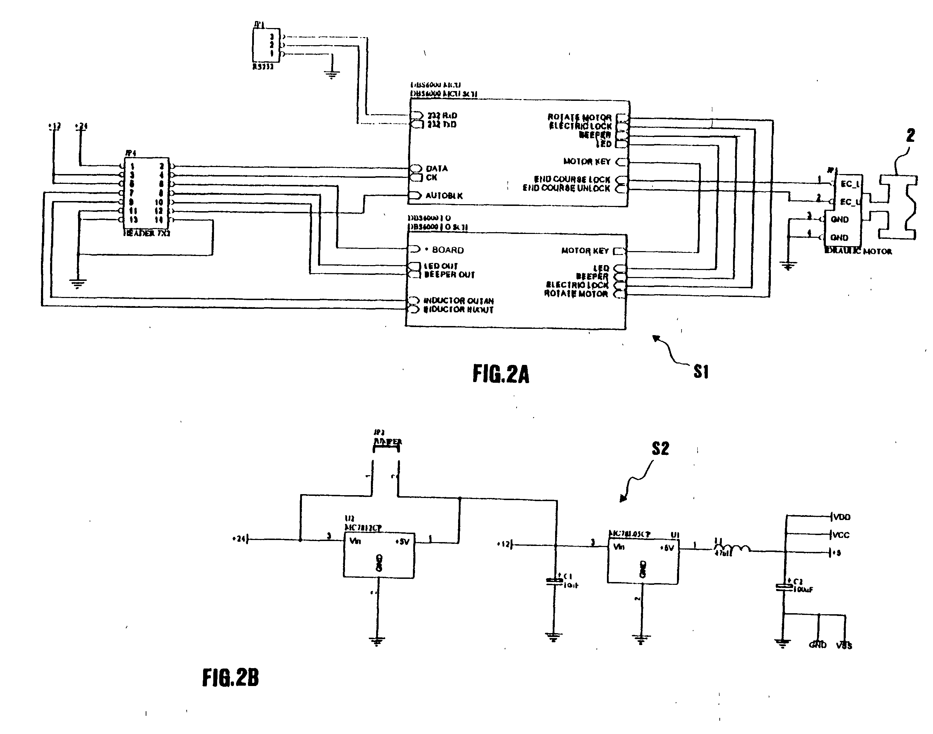

The figures 2A to 4E will be now referred to, showing the electric diagrams related to the electronic control system of the anti-theft device according to the present invention.

In particular, figure 2A shows a first general diagram S1 related to the electric connection of the motorized valve 2 to the anti-theft device itself, whereas figure 2B shows a diagram S2 related to the power supply unit of the whole anti-theft system.

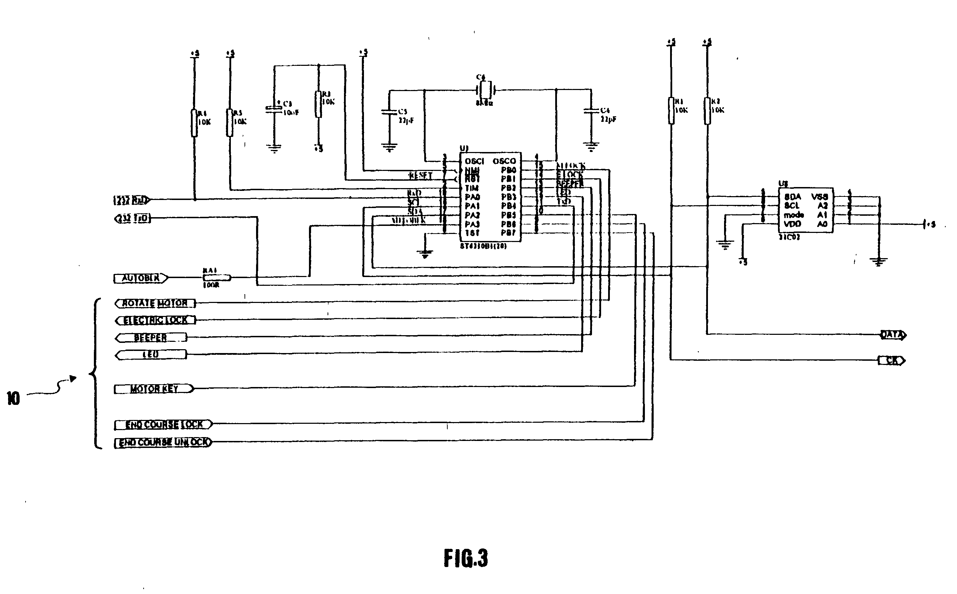

Figure 3 shows in detail the implementation of the control unit 1. The unit comprises a microprocessor U3, for example a ST6210B1-type integrated circuit. Such integrated circuit, of programmable type, comprises an inner memory apt to store a control program of the anti-theft device.

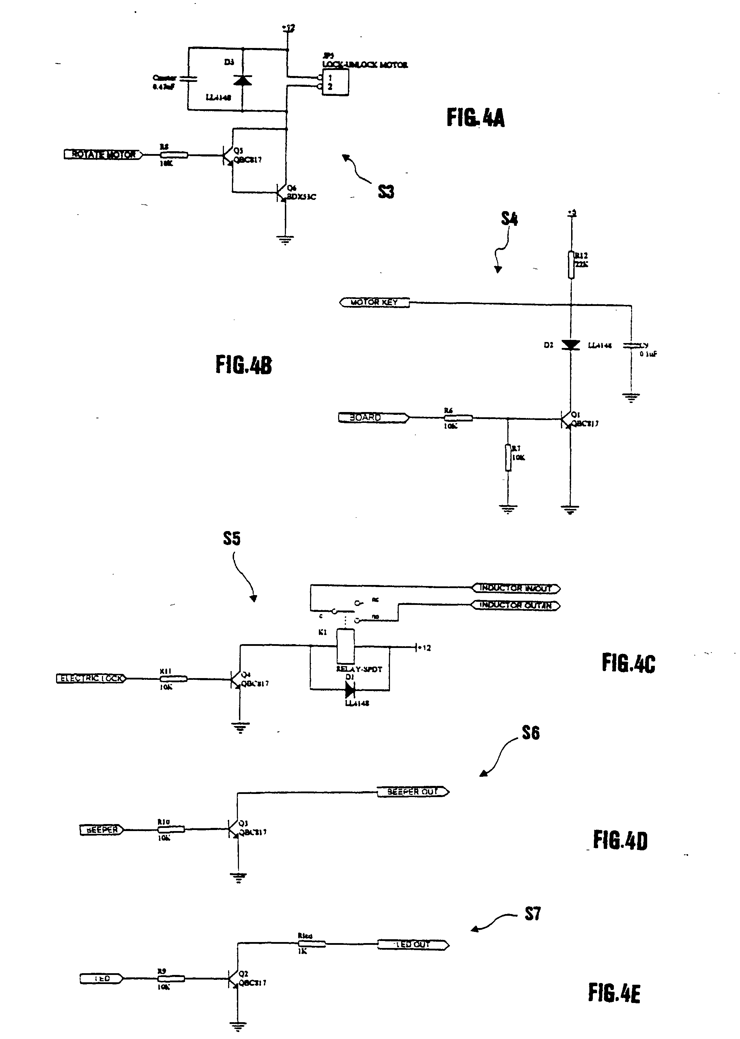

Actuation means 4 is furthermore connected to the microprocessor control unit 1, by the connections identified with the numeral 10 in figure, said actuation means being apt to electrically control the motor of the valve 2 and the acoustic and/or light signalling devices 5. The following figures 4A, 4B, 4C, 4D and 4E show electric diagrams exemplifying such actuation means 4.

In particular, a first diagram S3 is shown describing the electronic circuit apt to control the motor of the valve 2 when it receives a predetermined input signal by the microprocessor U1 by the line identified as 'ROTATE MOTOR'.

The diagram S4 shows instead a circuit detecting the turning on of the motor vehicle board by the line identified as '+BOARD' and activates correspondingly the line identified as 'MOTOR KEY' so as to signal this condition to the microprocessor.

The diagram S5 shows instead the circuit which, when controlled by the microprocessor by the line 'ELECTRIC MOTOR', enables to switch a relay acting on the motor vehicle electric circuit by preventing the operation thereof.

The diagrams S6 and S7, show instead two circuits utilized to drive signalling means 5, for example a beeper controlled by the line 'BEEPER OUT' and one or more LED controlled by the line 'LED OUT'

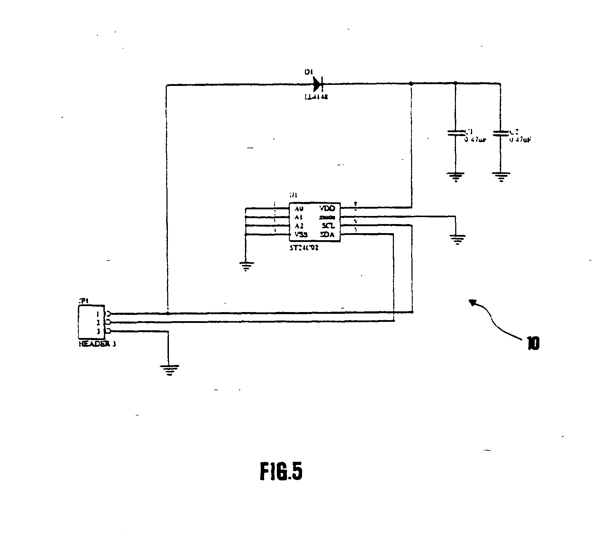

Figure 5 shows instead the diagram of the electronic device 10 utilized to activate and/or deactivate the anti-theft device. In particular, a ST24CO2-type integrated circuit U1, when connected to the control unit by the connector JP1, generates and transmits an encoded signal that, if recognized, enables performing predetermined procedures.

As already said, the control system implements all the functions necessary for the correct operation of the anti-theft device in any situation: normal operation, alarm and/or emergency.

According to the present invention, the anti-theft device provides the following functions.

### Handling of sabotage attempts

After a pre-established number of attempts to read the code transmitted by the electronic key, the anti-theft device automatically puts itself in a 'sabotage' status. Such status remains for a pre-established period of time, for example 765 seconds. At the end of this period of time the anti-theft device returns to the usual operating situation by making available to the user, however, one only code-reading attempt. If this reading turns out well the anti-theft device puts itself in a 'disabled' status, otherwise it returns to the 'sabotage' status.

### Recognition and handling of failures

The possible failures, detectable by the anti-theft device according to the present invention during the operation thereof, are the following:
- absent inner memory;
- malfunctioning inner memory;
- malfunctioning electronic key; and
- damaged or malfunctioning valve motor.

Upon each activation of the anti-theft device, a control of the status of the inner memory thereof is performed. The electronic key operates when the connector detects the presence thereof. The operation status of the valve motor is controlled each time the anti-theft device changes status from enabled to disabled or viceversa. The motor is considered damaged if it does not reach the required position within a predefined time, for example 4 seconds.

### Autoenabling

The anti-theft device comprises means JP2 for the automatic activation thereof, apt to pass from a disabled condition when the motor vehicle engine is running to an enabled condition when the motor vehicle engine is switched off. Such means is driven by a selector JP2. In the enabled condition, the control program starts a counting procedure of a pre-established time, at the end thereof the anti-theft device will automatically pass to the enabling status.

### Timed reset

The anti-theft device comprises means for automatically performing a reset procedure of the inner pressure of the hydraulic circuit thereto it is connected. The anti-theft device performs automatically the disabling and the subsequent cyclic reactivation of the motorized valve to avoid the adhering phenomenon of the braking elements. This operation is performed in an automatic way at prefixed time intervals, for example 30 minutes. This function, as already said, is particularly useful also to prevent an excessive damage of the gaskets and fillets of the hydraulic circuit, situation which occurs if the hydraulic circuit remains under pressure for too long periods of time.

The anti-theft device according to the present invention can naturally comprise additional functions which can be implemented by updates and/or changes of the above-mentioned control program, without involving changes in the operation principle of the anti-theft system.

Each possible status of the anti-theft system is signalled by the signalling means 5 which comprises acoustic and/or optical devices such as for example a beeper and one or more LED. The statuses provided for the anti-theft device according to the present invention are the following: enabled anti-theft device, disabled anti-theft device, sabotaged anti-theft device, error/failure (with identification of the error and/or failure type), autoenabling, enabled anti-theft device with turned-on board. Each of these statuses is visually and acoustically highlighted by a predefined sequence of sounds and/or blinkings, so as to be easily recognized by the user.

Even to each type of failure and/or error a predefined sequence of blinkings and/or sounds is associated, so as to be easily recognized by the user.

The present invention has been so far described by referring to a preferred embodiment thereof shown by way of example and not for limitative purposes. It is to be meant that other embodiments may exist, all belonging to the same inventive core, all comprised within the protective scope of the same invention, as defined by the enclosed claims.

## Claims

1. An anti-theft device for motor vehicles comprising:
• a control unit (1) with a programmable-type microprocessor;
• a motorized valve (2), apt to be mounted in a hydraulic circuit of a motor vehicle and to operate in a unidirectional way when positioned in a locked position, said valve (2) being apt to be controlled by said control unit (1);
• an electronic device (10), apt to generate a encoded electric signal when connected to said anti-theft device; and
• means for reading and decoding (3) said encoded electric signal generated by said electronic device (10)
**characterised in that** it further comprises means for the automatic performance of a resetting procedure of the inner pressure of said hydraulic circuit, wherein said means for the automatic performance of a resetting procedure is cyclically activated by said control unit (1) when the anti-theft device is enabled.

2. The anti-theft device according to claim 1, wherein said electronic device (10) is apt to be connected to said reading and decoding means (3) by connection means (JP1).

3. The anti-theft device according to claim 2, wherein said connection means comprises a connector (JP1) having three contacts.

4. The anti-theft device according to any one of the preceding claims, further comprising actuation means (4), connected to said control unit (1), apt to control the driving of said motorized valve (2).

5. The anti-theft device according to claim 4, wherein said actuation means (4) is activated by said control unit (1) when said reading and decoding means (3) receives a predetermined electric signal by said electronic device (10).

6. The anti-theft device according to claim 4 or 5, wherein said actuation means (4) is apt to co-operate with the motor vehicle electric circuit.

7. The anti-theft device according to any one of the preceding claims, further comprising automatic activation means (JP2) for automatically activating the anti-theft device.

8. The anti-theft device according to claim 7, wherein said automatic activation means (JP2) is apt to pass from a disabled condition when the motor vehicle engine is running to an enabled condition when the motor vehicle engine is switched off.

9. The anti-theft device according to claim 7 or 8, wherein said automatic activation means comprises a selector (JP2).

10. The anti-theft device according to any one of the preceding claims, further comprising signalling means (5) of the anti-theft device status.

11. The anti-theft device according to claim 10, wherein said signalling means (5) comprises at least one LED.

12. The anti-theft device according to claims 10 or 11, wherein said signalling means (5) comprises a beeper.

13. The anti-theft device according to any one of the preceding claims, wherein said hydraulic circuit comprise a braking system of said motor vehicle

14. The anti-theft device according to any one of the preceding claims, wherein said hydraulic system comprise a driving system of said motor vehicle clutch.

## Patentansprüche

1. Diebstahlsicherungsvorrichtung für Kraftfahrzeuge, die umfasst:
eine Steuereinheit (1) mit einem programmierbaren Mikroprozessor;
ein motorgetriebenes Ventil (2), das in einem Hydraulikkreis eines Kraftfahrzeuges angebracht werden kann und unidirektional arbeitet, wenn es in einer arretierten Position angeordnet wird, wobei das Ventil (2) durch die Steuereinheit (1) gesteuert werden kann;
eine elektronische Vorrichtung (10), die ein codiertes elektrisches Signal erzeugen kann, wenn sie mit der Diebstahlsicherungsvorrichtung verbunden ist, und
eine Einrichtung zum Lesen und Decodieren (3) des durch die elektronische Vorrichtung (10) erzeugten codierten elektrischen Signals,
**dadurch gekennzeichnet, dass** sie des Weiteren eine Einrichtung zum automatischen Durchführen eines Rücksetzvorgangs des Innendrucks des hydraulischen Kreises umfasst, wobei die Einrichtung zum automatischen Durchführen eines Rücksetzvorgangs durch die Steuereinheit (1) zyklisch aktiviert wird, wenn die Diebstahlsicherungsvorrichtung angeschaltet ist.

2. Diebstahlsicherungsvorrichtung nach Anspruch 1, wobei die elektronische Vorrichtung (10) durch Verbindungseinrichtungen (JP1) mit der Lese-und-Decodier-Einrichtung (3) verbunden werden kann.

3. Diebstahlsicherungsvorrichtung nach Anspruch 2, wobei die Verbindungseinrichtung einen Verbinder (JP1) mit drei Kontakten umfasst.

4. Diebstahlsicherungsvorrichtung nach einem der vorangehenden Ansprüche, die des Weiteren eine Betätigungseinrichtung (4) umfasst, die mit der Steuereinheit (1) verbunden ist und den Antrieb des motorgetriebenen Ventils (2) steuern kann.

5. Diebstahlsicherungsvorrichtung nach Anspruch 4, wobei die Betätigungseinrichtung (4) durch die Steuereinheit (1) betätigt wird, wenn die Lese-und-Decodier-Einrichtung (3) ein vorgegebenes Signal von der elektronischen Vorrichtung (10) empfängt.

6. Diebstahlsicherungsvorrichtung nach Anspruch 4 oder 5, wobei die Betätigungseinrichtung (4) mit dem Stromkreis des Kraftfahrzeugs zusammenwirken kann.

7. Diebstahlsicherungsvorrichtung nach einem der vorangehenden Ansprüche, die des Weiteren eine automatische Aktivierungseinrichtung (JP2) zum automatischen Aktivieren der Diebstahlsicherungsvorrichtung umfasst.

8. Diebstahlsicherungsvorrichtung nach Anspruch 7, wobei die automatische Aktivierungseinrichtung (JP2) von einem abgeschalteten Zustand, wenn der Motor des Kraftfahrzeugs läuft, in einen angeschalteten Zustand übergehen kann, wenn der Motor des Kraftfahrzeugs abgeschaltet wird.

9. Diebstahlsicherungsvorrichtung nach Anspruch 7 oder 8, wobei die automatische Aktivierungseinrichtung eine Wähleinrichtung (JP2) umfasst.

10. Diebstahlsicherungsvorrichtung nach einem der vorangehenden Ansprüche, die des Weiteren eine Signalisierungseinrichtung (5) des Status der Diebstahlsicherungsvorrichtung umfasst.

11. Diebstahlsicherungsvorrichtung nach Anspruch 10, wobei die Signalisierungseinrichtung (5) wenigstens eine LED umfasst.

12. Diebstahlsicherungsvorrichtung nach den Ansprüchen 10 oder 11, wobei die Signalisierungseinrichtung (5) einen Piepser umfasst.

13. Diebstahlsicherungsvorrichtung nach einem der vorangehenden Ansprüche, wobei der Hydraulikkreis ein Bremssystems des Kraftfahrzeugs umfasst.

14. Diebstahlsicherungsvorrichtung nach einem der vorangehenden Ansprüche, wobei das Hydrauliksystem ein Antriebssystem der Kupplung des Kraftfahrzeugs umfasst.

## Revendications

1. Dispositif antivol pour véhicule motorisé comprenant :
• une unité (1) de commande avec un microprocesseur programmable ;
• un robinet (2) motorisé, pouvant être monté dans un circuit hydraulique d'un véhicule motorisé et pour fonctionner de façon unidirectionnelle lorsque positionné dans une position verrouillée, ledit robinet (2) pouvant être commandé par ladite unité (1) de commande ;
• dispositif électronique (10), pouvant générer un signal électrique codé lorsqu'il est connecté audit dispositif antivol ; et
• un moyen pour lire et décoder (3) ledit signal électrique codé généré par ledit dispositif électronique (10)
**caractérisé en ce qu'**il comprend en outre un moyen pour la réalisation automatique d'une procédure de réinitialisation de la pression interne dudit circuit hydraulique, dans lequel ledit moyen pour la réalisation automatique d'une procédure de réinitialisation est activé de manière cyclique par ladite unité (1) de commande lorsque le dispositif antivol est activé.

2. Dispositif antivol selon la revendication 1, dans lequel ledit dispositif électronique (10) peut être connecté audit moyen pour lire et décoder (3) par un moyen de connexion (JP1).

3. Dispositif antivol selon la revendication 2, dans lequel ledit moyen de connexion comprend un connecteur (JP1) ayant trois contacts.

4. Dispositif antivol selon l'une quelconque des revendications précédentes, comprenant en outre un moyen d'actionnement (4), connecté à ladite unité (1) de commande, pouvant commander l'entraînement dudit robinet (2) motorisé.

5. Dispositif antivol selon la revendication 4, dans lequel ledit moyen d'actionnement (4) est activé par ladite unité (1) de commande lorsque ledit moyen pour lire et décoder (3) reçoit un signal électrique prédéterminé dudit dispositif électronique (10).

6. Dispositif antivol selon la revendication 4 ou 5, dans lequel ledit moyen d'actionnement (4) pouvant collaborer avec le circuit électrique du véhicule motorisé.

7. Dispositif antivol selon l'une quelconque des revendications précédentes, comprenant en outre un moyen d'activation automatique (JP2) pour activer automatiquement le dispositif antivol.

8. Dispositif antivol selon la revendication 7, dans lequel ledit moyen d'activation automatique (JP2) peut passer d'une situation inactive lorsque le moteur du véhicule motorisé tourne à une situation active lorsque le moteur du véhicule motorisé est arrêté.

9. Dispositif antivol selon la revendication 7 ou 8, dans lequel ledit moyen d'activation automatique comprend un sélecteur (JP2).

10. Dispositif antivol selon l'une quelconque des revendications précédentes, comprenant en outre un moyen de signalisation (5) de l'état du dispositif antivol.

11. Dispositif antivol selon la revendication 10, dans lequel ledit moyen de signalisation (5) comprend au moins une diode électroluminescente.

12. Dispositif antivol selon la revendication 10 ou 11, dans lequel ledit moyen de signalisation (5) comprend un avertisseur sonore.

13. Dispositif antivol selon l'une quelconque des revendications précédentes, dans lequel ledit circuit hydraulique comprend un système de freinage dudit véhicule motorisé.

14. Dispositif antivol selon l'une quelconque des revendications précédentes, dans lequel ledit système hydraulique comprend un système d'entraînement dudit embrayage de véhicule motorisé.
